# EUROPEAN PATENT APPLICATION

(11) **EP 1 505 571 A1**
(43) Date of publication of application: **09.02.2005**
(21) Application number: 02717135.4
(22) Date of filing: 12.04.2002
(51) Int. Cl.: G10L 15/00, G10L 15/06, G10L 15/28, G01C 21/00, G08G 1/0969

(54) **CAR NAVIGATION SYSTEM AND SPEECH RECOGNIZING DEVICE THEREOF**

(71) Applicant: MITSUBISHI DENKI KABUSHIKI KAISHA, Tokyo 100-8310 (JP)
(72) Inventor: MARUTA, Yuzo, c/o Mitsubishi Denki Kabushiki K., Tokyo 100-8310 (JP)
(74) Representative: Pfenning, Meinig & Partner GbR
(86) International application number: PCT/JP2002/003680
(87) International publication number: WO 2003/088209

(57) **Abstract**

A car navigation system is provided with a voice recognition capability to search position information by means of voice recognition without requiring registration of voice recognition standard patterns for words to be recognized.

The system includes: a sound analysis means (113) for acoustically analyzing a user's vocal utterance and outputting an input-sound feature vector, an acoustic-model storage means (114) for storing in advance respective acoustic models for predetermined sound units in which a syllable or a phoneme is deemed a sound unit, a sound-unit recognition means (115) for checking the input-sound feature vector against the acoustic models to output a relevant sound-unit recognition candidate string, a word-and-position-information registration means (118) for correlating and registering in a word-and-position-information correlation dictionary the sound-unit recognition candidate string and position information acquired from the car navigation system main unit, and a position-information searching/outputting means (119) for calculating the acoustic likelihood by checking the input-sound feature vector outputted by the sound analysis means against sound feature vectors for each sound-unit recognition candidate string in the word-and-position-information correlation dictionary, and outputting, to the car navigation main unit, position information associated with the sound-unit recognition candidate string for which the calculated acoustic likelihood is not less than a predetermined threshold.

## Description

### TECHNICAL FIELD

The present invention relates to a car navigation system using a voice recognition device.

### BACKGROUND ART

In order to make operating a car navigation system less burdensome while driving a car and to create an easy-to-use operational interface even for a user who is not specially trained, a voice recognition device has often been installed. In such a car-navigation voice recognition device, generally, in order to identify inputted voices, frequency distributions and the like, of voices to be recognized, are analyzed in advance, and spectrums, time-sequence fundamental-frequency information, and the like are extracted as the features; dictionaries for voice recognition that store corresponding patterns thereof are provided. The voice-recognition dictionaries for such purposes generally include speaker-independent dictionaries in which patterns (hereinafter referred to as standard patterns) generated by patterning statistically processed voice-frequency distributions for many unspecified speakers are registered along with the corresponding words, and speaker-dependent dictionaries in which inputted voice patterns for a specified speaker are registered along with the corresponding words. Because such dictionaries include very large numbers of words and their standard patterns, they are often stored in external storage devices.

In such voice recognition devices, when a voice to be recognized is inputted, standard patterns for each word stored in both the dictionaries are sequentially read from the external storage devices, and a spectrum pattern for the inputted voice is compared with and checked against the standard patterns by pattern matching, and the degree of similarity is calculated for each of the words. Next, the word having the.highest calculated degree of similarity (the word having the closest pattern) is recognized as an inputted voice, and is outputted. Namely, the inputted voice is identified by examining which word pattern most resembles the frequency-distribution pattern of the inputted word.

Because conventional voice recognition devices and car navigation systems using the voice recognition devices are configured as described above, there has been a problem in that, in order to generate standard patterns, the pronunciations of words (e.g., information such as the fact that " 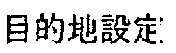 " is pronounced as "mokutekichisettei") that are likely to be voice-recognized must be stored in advance.

Moreover, in another conventional voice recognition device, in order to reduce memory used for storing standard patterns for the words, a method is sometimes adopted in which, although standard patterns for all the words are temporarily generated for recognition when being registered, the word patterns only for the words that have been successfully recognized among them are preserved, and only the preserved word patterns are used for matching in actual use.

Because conventional voice recognition devices and car navigation systems using the voice recognition devices are configured as described above, if a word has not been successfully recognized, the word pattern for that word cannot be registered to a specific dictionary as a standard pattern. Therefore, there has been another problem in that the pronunciation of a word which has never been successfully recognized, or more specifically, any pronunciation of the word other than the previously prepared way of pronouncing, cannot be registered.

In addition, because conventional voice recognition devices and car navigation systems using the voice recognition devices are configured as described above, there has been another problem in that a word must have been used at least once in order to be recognized, and therefore, a word that has never been used cannot be recognized.

Further, because conventional voice recognition devices and car navigation systems using the voice recognition devices are configured as described above, there has been anotherproblem in that a long processing time is needed for sequentially reading out a large number of words and their standard patterns stored in an external storage device and for performing the process of matching, and therefore, achieving a good response is difficult.

The present invention is made to resolve the above-described problems. An object of the invention is to eliminate the need for advance storing of the pronunciations of words that have to be voice-recognized by registering, as standard patterns, vocal utterances of a user, and to enable recognition of not only standard pronunciations but also non-standard pronunciations.

Another object of the invention is to enhance precision in recognition-matching of utterances, made by a user in navigating, with users' registered utterances by developing, using a confused-sound-unit matrix, the users' registered utterances and words acoustically similar to them, and registering those similar words together.

Moreover, when matching is performed using not only the words stored in the external storage device but also the pronunciations of the words, the invention aims to eliminate unnecessary matching processing by grouping words resembling in pronunciation, recognition-matching a user's utterance with a representative word in each group, and performing matching of the user's utterance with the rest of the words affiliated by the group only when the acoustic likelihood of matching is not less than a predetermined threshold, and to improve memory-use efficiency by loading into memory the words and the pronunciations in the external storage device in groups.

### DISCLOSURE OF THE INVENTION

A voice recognition device relevant to a first aspect of the invention includes: a sound analysis means for acoustically analyzing a user's vocal utterance inputted by a voice input means, and for outputting a feature vector for the input sound; an acoustic-model storage means for storing in advance respective acoustic models for predetermined sound units, either a syllable or a phoneme being deemed a sound unit; a sound-unit recognition means for checking the input-sound feature vector against the acoustic models to output a sound-unit recognition candidate string; aword-and-position-information registration means for correlating and registering in a word-and-position-information correlation dictionary the sound-unit recognition candidate string and position information acquired from a main unit of the car navigation system; and a position-information searching/outputting means for calculating acoustic likelihoods by collating the input-sound feature vector outputted by the sound analysis means, against sound feature vectors for the sound-unit recognition candidate strings in the word-and-position-information correlation dictionary, and outputting, to the car navigation main unit, position information that the word-and-position-information correlation dictionary stores related to that sound-unit recognition candidate string whose calculated acoustic likelihood is not less than a predetermined threshold.

A voice recognition device relevant to a second aspect of the invention includes: a confused-sound-unit matrix storing means for storing in advance respective probabilities that a vocal sound unit uttered by a human being will be recognized as a different recognition result as a consequence of the recognition precision of the sound analysis means, for each of recognition-result sound units; a confused-sound-unit matrix searching means for extracting a recognition result sound unit list composed of recognition result sound units in which the recognition probability is not less than a predetermined threshold for each sound unit in the sound-unit recognition candidate string outputted by the sound-unit recognition means; and a word developing means for outputting candidates resembling the sound-unit recognition candidate string acquired by replacing each sound unit in the sound-unit recognition candidate string with a recognition result sound unit from the recognition result sound unit list; wherein the word-and-position-information registration means correlates and registers, in the word-and-position-information correlation dictionary, the resembling candidates and the position information acquired from the car navigation system main unit.

A voice recognition index-searching device relevant to a third aspect of the invention includes: a similar-word indexing means for categorizing a plurality of words into groups in which words resemble in pronunciation, selecting a word in each group as a representative word, and storing relationships between the representative word and its group; and a means for searching for similar words within a group, the means collating a sound feature vector for the representative word for each group stored in the similar-word indexing means against a given sound feature vector to calculate respective acoustic likelihoods, and collating a sound feature vector for each word in that group whose representative word has an acoustic likelihood, among the calculated results, not less than apredetermined threshold, against the given sound feature vector to calculate respective acoustic likelihoods, and outputting the word having the greatest acoustic likelihood.

A voice recognition index generation means relevant to a fourth invention includes: a representative word selection means for selecting a single word as a representative word from an original set composed of a plurality of words; an acoustically similar word grouping means for extracting from the original set a word in which the acoustic likelihood between a sound feature vector for the word and a sound feature vector for the representative word is not less than a predetermined threshold, and including the extracted word and the representative word in an identical group; and an original-set replacing means for passing to the representative word selection means the word set left by removing from the original set the word affiliated by the group, as another original set to be processed by the representative word selection means.

A voice recognition device relevant to a fifth invention is configured so that the position-information searching/outputting means includes a voice recognition index-searching device according to the third aspect or the fifth aspect of the invention, and the position-information searching/outputting means uses the voice recognition index-searching device to search for and output words, their pronunciations, and position information stored in the word-and-position-information correlation dictionary or an external storage device.

A voice recognition device relevant to a sixth invention is configured so that the word-and-position-information registration means reads for each sound unit in the sound-unit recognition candidate string, from the confused-sound-unit matrix storing means, the probability that each sound unit in the sound-unit recognition candidate string is recognized as a resembling candidate sound unit in the sound-unit recognition candidate string corresponding to the sound unit according to the recognition precision of the sound analysis means, generates a probability list for the resembling candidates that includes the probability for each sound unit, and registers the resembling candidates and the probability list in the word-and-position-information correlation dictionary; and the position-information searching/outputting means, after reading resembling word candidates stored in the word-and-position-information correlation dictionary and the probability list for those resembling words, and if the probability in the probability list is not less than a predetermined threshold, calculates the acoustic likelihood by checking the input-sound feature vector against the sound feature vector outputted by the sound feature vector generation means and outputs a sound-unit recognition candidate string whose acoustic likelihood is not less than the predetermined threshold; and if the probability is less than the predetermined threshold, the position-information searching/outputting means uses the voice recognition index-searching device relevant to the third aspect or the fifth aspect of the invention to search for words, their pronunciations and position information stored in the external storage device.

A car navigation system relevant to a seventh invention includes a current position detection means, a map data storage means, an image display means, a graphical pointing means, a destination input means, and a voice recognition device, which is relevant to any one of the first, second, fifth, or sixth aspects of the invention.

### BRIEF DESCRIPTION OF DRAWINGS

Fig. 1 is a block diagram of a voice recognition registration device for a car navigation system that illustrates Embodiment 1 of the invention;
Fig. 2 is a process flowchart related to the voice recognition registration device for the car navigation system that illustrates Embodiment 1 of the invention;
Fig. 3 is a block diagram of a voice recognition registration device for a car navigation system that illustrates Embodiment 2 of the invention;
Fig. 4 is a flowchart of processing relevant to the voice recognition registration device for the car navigation system illustrating Embodiment 2 of the invention;
Fig. 5 is a diagram illustrating an example of a confused-sound-unit matrix in Embodiment 2 of the invention;
Fig. 6 is a flowchart illustrating processing for generating similar syllable strings in the voice recognition registration device for the car navigation system in Embodiment 2 of the invention;
Fig. 7 is a diagram illustrating an example of developed words obtained by replacing sound units of sound-unit recognition results with similar candidates in the voice recognition registration device for the car navigation system in Embodiment 2 of the invention;
Fig. 8 is a block diagram of a voice recognition registration device for a car navigation system in Embodiment 3 of the invention;
Fig. 9 is a flowchart illustrating processing relevant to the voice recognition registration device for the car navigation system in Embodiment 3 of the invention;
Fig. 10 is a block diagram of a voice recognition index-searching device in Embodiment 4 of the invention;
Fig. 11 is a process flowchart for a voice recognition registration device for a car navigation system in Embodiment 4 of the invention;
Fig. 12 is a block diagram illustrating a voice recognition index generation method in Embodiment 5 of the invention; and
Fig. 13 is a flowchart illustrating processing according to the voice recognition index generation method in Embodiment 5 of the invention.

### BEST MODE FOR CARRYING OUT THE INVENTION

Hereinafter, a voice recognition device for a car navigation system relevant to the invention will be described based on drawings according to each embodiment.

### Embodiment 1.

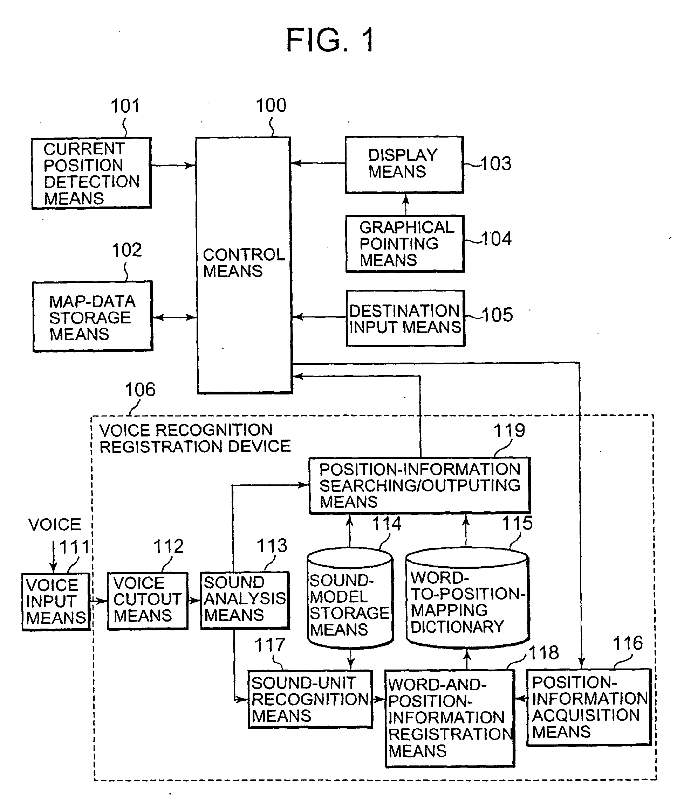

Fig. 1 illustrates a system configuration of a navigation system having a voice recognition device, in Embodiment 1 of the present invention. In the figure, numeral 101 denotes a current position detection means for detecting the current position of a vehicle, and the means includes a geomagnetic sensor of a well-known configuration, a gyroscope, a distance sensor, and a GPS receiver for a GPS (Global Positioning System) for detecting the vehicle position based on radio waves from satellites. Because these sensors have errors that differ in character, a control means uses the sensors while interpolating the data.

Numeral 102 denotes a map-data storage means that stores various data including what is called data for map-matching for enhancing precision in position detection, map data, and landmark data. Although, a CD-ROM is generally used as storage media for the map-data storage means 102, other media such as a DVD-ROM or a memory card may be used.

Numeral 103 denotes a displaymeans for displaying a screen, and the means generally includes a color-display capability. On the screen of the display means, a current vehicle-position mark inputted by the current position detection means 101, map data inputted by the map data storage means 102, and further additional data such as a guided route displayed on the map and later-described landmarks for designated spots are displayed in overlapping style.

Numeral 104 denotes a graphical pointing means, which is a pointing means such as a pointer for specifying a portion of an image displayed by the display means.

Numeral 105 denotes a destination input means for inputting positions and names of destinations, which is realized, for example, by means of a remote control sensor that receives operation signals for a remote control terminal (hereinafter referred to as a remote controller) or operation switches, and is used to input the position and name of the destination. In addition, the destination input means is used for inputting other instructions to the car navigation system. Switches such as mechanical switches or touch switches that are integrated with the display means are used for the operation switches.

Numeral 111 denotes a voice input means, such as a microphone, for inputting a voice, and the means transforms the voice into a digital signal. Numeral 112 denotes a voice cutout means, which eliminates silent segments and noisy segments from the voice inputted by the voice input means 111, and detects ranges in which only human voice is present. Numeral 113 denotes a sound analysis means, which extracts features suitable for voice recognition from the voice picked out by the voice cutout means 112.

Numeral 114 denotes an acoustic-model storage means, which stores sound units (in Japanese, for example, syllables ("a"/a/, "i"/i/, "u"/u/, "e"/e/, "o"/o/, "ka"/ka/, "ki"/ki/, "ku"/ku/, "ke"/ke/, "ko"/ko/, etc.)) and respective acoustic patterns. Numeral 115 denotes a word-to-position-mapping dictionary, in which words to be recognized, their acoustic patterns, and position information related to the words are to be registered; however, nothing is registered in the initial state (when shipped from the factory). Numeral 116 denotes a position-information acquisition means, which acquires the position information from the main unit of the car navigation system and outputs the position information. Numeral 117 denotes a sound-unit recognition means, which performs continuous voice recognition by checking the features of the inputted voice extracted by the sound analysis means 113 against the acoustic patterns of the sound units stored in the acoustic-model storage means, and outputs as a recognition candidate a string of sound units that has the greatest acoustic likelihood (probability). Numeral 118 denotes a word-and-position-information registration means, which registers a recognition candidate outputted by the sound-unit recognition means 117, together with the position information acquired from the position-information acquisition means 116, in the word-to-position-mapping dictionary 115. Numeral 119 denotes a position-information searching/outputting means. The position-information searching/outputting means generates, from each word registered in the word-to-position-mapping dictionary 115 and the acoustic patterns of the sound units stored in the acoustic-model storage means, a sound feature vector for the word, and calculates the acoustic likelihood with the sound feature vector for the inputted voice extracted by the sound analysis means 113. After that, the position-information searching/outputting means lists as recognition candidates the N words (N is an integer), from the words stored in the word-to-position-mapping dictionary 115, with the greatest acoustic likelihood of matching the inputted voice, and outputs to the main unit of the car navigation system the position information that the word-to-position-mapping dictionary 115 has stored, related to the recognition candidates.

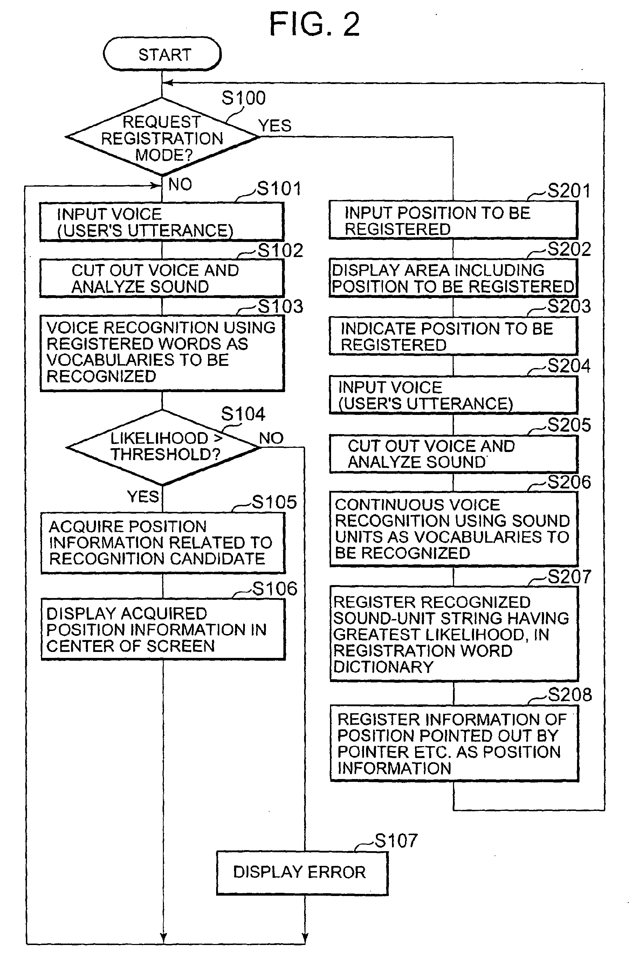

Next, the operation will be described using Fig. 2. Here, Japanese is taken as an example, and a syllable is taken as a sound unit. Firstly, the operation in which words are registered will be described. To begin with, a user inputs an instruction for registration processing using an operation switch attached to the destination input means 105 (step S100: YES). Next, when the user inputs a position to be registered (e.g., the user's home) by the destination input means 105 (step S201), the display means 103 displays a map screen including the inputted destination (step S202). Next, the user indicates on the screen, by means of the graphical pointing means 104, the position to be registered (the user's home in this case) (step S203). Next, the user utters a name for the position (e.g., "jibunnoie") (step S204).

The voice input means 111 samples the inputted voice, converts the voice to digital data, and sends the data to the voice cutout means 112. The voice cutout means 112 eliminates silent segments and noisy segments within the inputted data using inputted voice power information and the like, and cuts out the portions that are actual voice. Next, the sound analysis means 113 extracts features suitable for voice recognition (features such as the well-known Mel-Cepstrum) from the voice data in the segments cut out by the voice cutout means 112 (step S205). Next, the sound-unit recognition means 117 performs continuous voice recognition using the features of each sound unit (syllable in this case) stored in the acoustic-model storage means 114 and the features outputted by the sound analysis means 113, and outputs a probable sound-unit string (a syllable string in this case) as a recognition candidate. In the case, if the recognition performance is good, the syllable string "ji-bu-n-no-i-e" becomes a recognition candidate (step S206).

Next, the position-information acquisition means 116 acquires from the map data storage means 102 the position on the map, pointed out by the graphical pointing means 104, and outputs the position. In the case, for example, the position information for the user's home address (east longitude and north latitude, block number, etc.) is outputted. Next, the word-and-position-information registration means 118 registers in the word-to-position-mapping dictionary 115 a recognition-candidate syllable string outputted by the sound-unit recognition means 117 together with the position information outputted by the position information acquisition means 116. In this case, a syllable string "ji-bu-n-no-i-e" is registered in the word-to-position-mapping dictionary 115 together with the user's home address (e.g., "5-1-1, Ofuna, Kamakura-shi").

Words are registered by repeating the above-described processing.

Next, operation for an address search by the car navigation system will be described. To begin with, the user inputs an instruction to perform search processing (step S100: NO) . Next, the user utters an address that the user wants to search for and display (e.g., "jibunnoie") (step S101).

The voice input means 111 samples the inputted voice, converts the voice into digital data, and sends the data to the voice cutout means 112. The voice cutout means 112 eliminates silent segments and noisy segments within the inputted data based on power information of the inputted voice and the like, and cuts out portions including real voices. Next, the sound analysis means 113 extracts from the voice data in the segments cut out by the voice cutout means 112 the features suitable for voice recognition (features such as the well-known Mel-Cepstrum) as a sound feature vector (step S102). Next, the position-information searching/outputting means 119 synthesizes acoustic patterns stored in the acoustic-model storage means 114 based on sound units of the words stored in the word-to-position-mapping dictionary 115, and generates a sound feature vector for the word-to-position-mapping dictionary 115. The position-information searching/outputting means 119 performs word recognition by checking the sound feature vector against the sound feature vector outputted by the sound analysis means 113, and outputs the probable word as a recognition-result word. In this case, the word "jibunnoie" becomes a recognition-result word (S103).

Next, the position-information searching/outputting means 119 checks whether the acoustic likelihood of the recognition-result words is at or above a predetermined threshold. When the acoustic likelihood is below the predetermined threshold (step S104: NO), an error message that the recognition has failed is displayed, and then the system enters a voice-input waiting state. When the acoustic likelihood of the recognition-result words is at or above the predetermined threshold (step S104: YES), the position information that the word-to-position-mapping dictionary 115 stores in relation to the recognition-result words is obtained, and then outputted to the car navigation main unit. In this case, position information "5-1-1, Ofuna, Kamakura-shi" is outputted. Next, the display means 103 displays map information as an image so that the position indicated by the obtained position information is at the center of the map.

The above-described processing enables a user to vocally register destination names freely according to the user's personal way of pronouncing, and to vocally search for destinations.

Moreover, because the embodiment is configured as described above, there is no need to prepare in advance pronunciations of addresses when being shipped from the factory. Accordingly, because it is possible to eliminate the preparation and listing up, when shipping from the factory, of voice data with no chance of being used by users, there is a benefit in that the storage capacity used for the voice data can be reduced.

Furthermore, because the above-described position-information searching/outputting means 119 performs recognition processing only on the words registered in the word-and-position-information correlation dictionary, the number of words to be searched is generally small, and similar words are few, so that there is a benefit in that high-speed and high-precision recognition can be performed.

Moreover, although only one syllable string having a great likelihood is registered in the registration processing in the embodiment, the most likely N sound unit strings (N is an integer) may be registered. In this case, when "jibunnoie" is uttered, for example, the first-place syllable string "jibunnoie", the second-place syllable string "jibunnoyue", and the like are registered in the word-and-position-information correlation dictionary as being related to the identical position information. Further, sound unit strings having an acoustic likelihood greater than a predetermined threshold may be similarly registered in the word-and-position-information correlation dictionary. With this configuration, a car navigation system can be provided that tolerates unclear utterances in word recognition when carrying out position information searches.

In addition, since voice recognition in Japanese has been described here, minimum Japanese utterance units, that is, syllables, have been described; however, it will be obvious that, in cases of foreign languages, similar embodiments can be configured by using a recognition means and an acoustic model for minimum utterance units such as phonemes, taking consonants and the like into consideration.

### Embodiment 2.

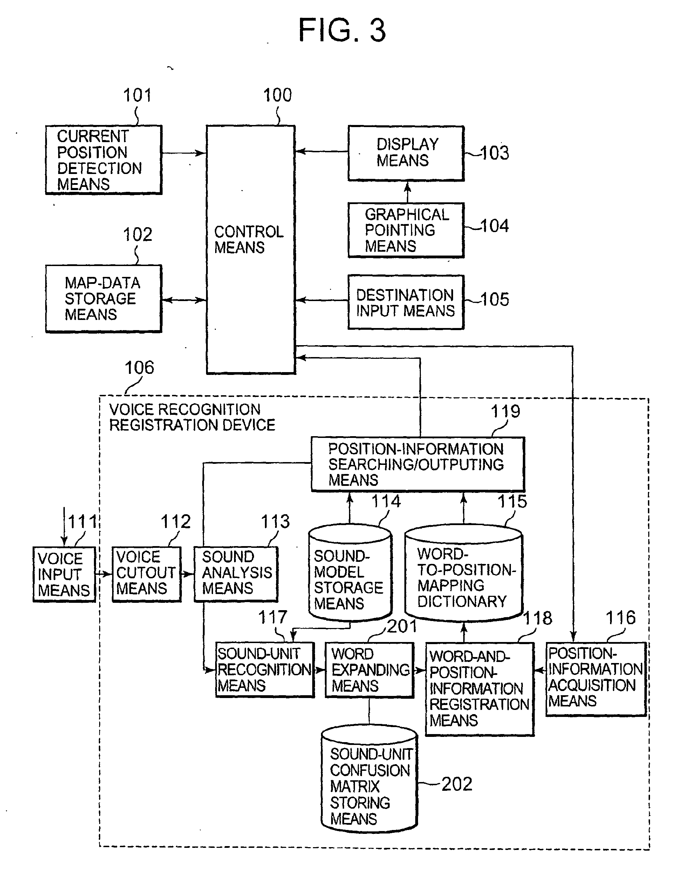

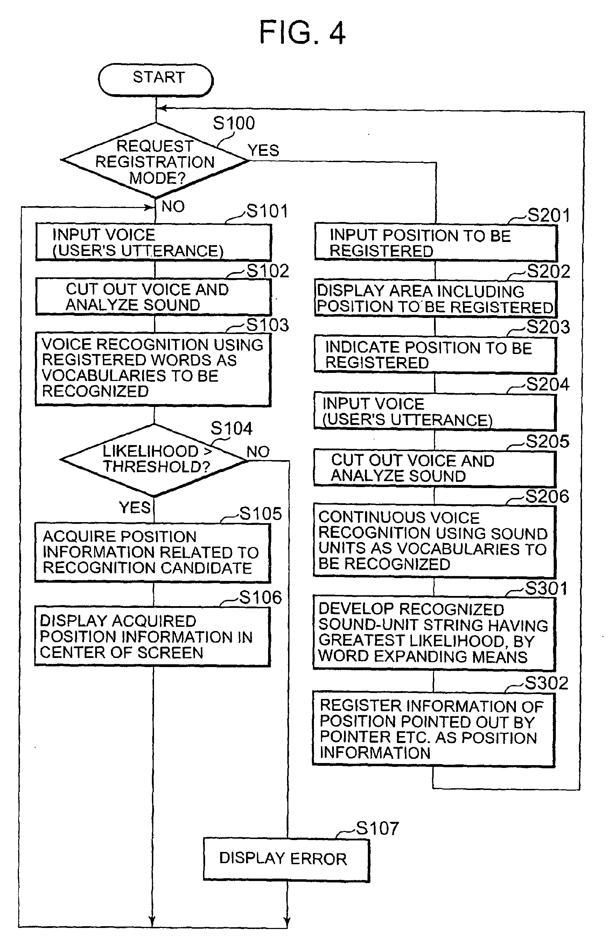

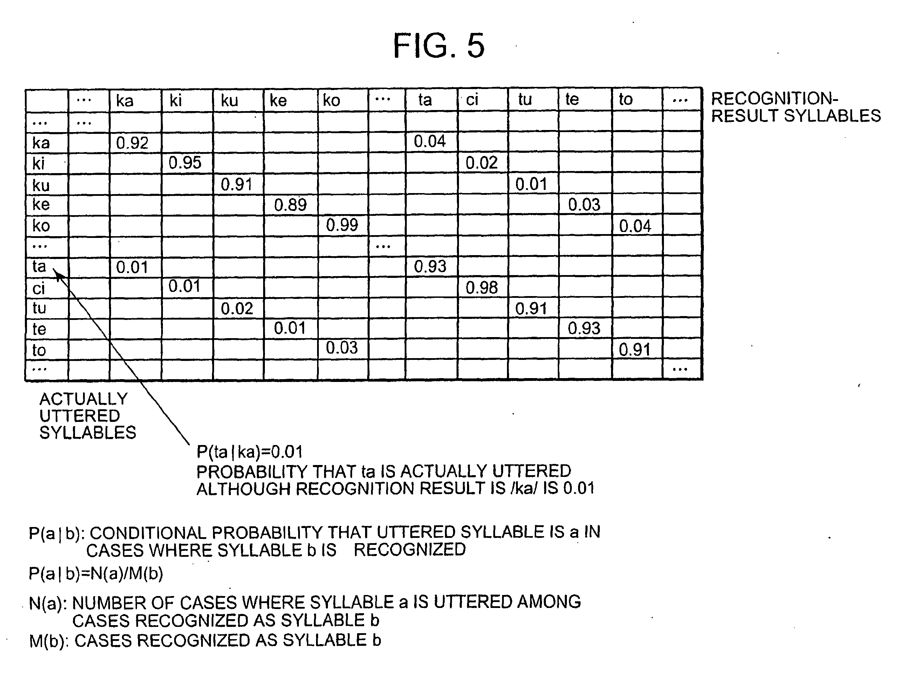

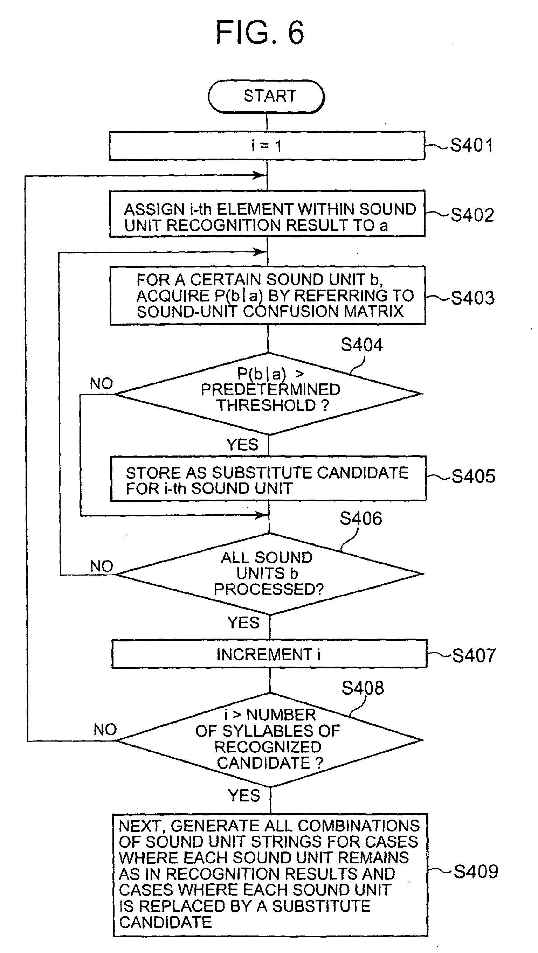

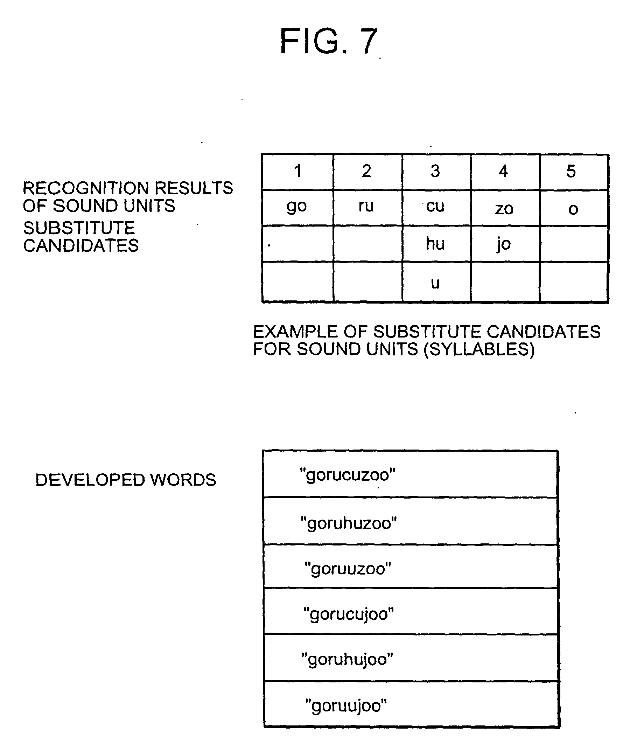

Next, a voice recognition device relevant to another embodiment of the invention will be described. Embodiment 2 provides a voice recognition device in which the recognition performance does not easily degrade even if errors are included in recognition results at registration. Fig. 3 illustrates a system configuration in which a voice recognition device related to the embodiment is applied to a navigation system. In the figure, numeral 201 denotes a word expanding means, which develops similar candidates from recognition results. Numeral 202 denotes a sound-unit confustion matrix storing means, which stores confused-sound-unit matrices. Fig. 4 and Fig. 6 are diagrams for describing processing flows. Fig. 5 and Fig. 7 are explanatory diagrams. Here, Japanese is used as an example, and a syllable is taken as a sound unit.

Aconfused-sound-unit matrix (a confused-syllable matrix in this case) stored in the sound-unit confustion matrix storing means 202 is expressed as shown in Fig. 5 in the form of a matrix of pairs of sound units (syllables in this case) that are easily confusable in the recognition processing. Each of the components in the matrix is expressed as a conditional probability. A conditional probability that an actual utterance is X and the recognition result of the utterance X is Y is expressed as P(X|Y). For example, the probability that the recognition result is a syllable "ka (/ka/)" while the actual utterance is "ta (/ta/)" is expressed as P(ta|ka). The conditional probabilities are calculated in advance from a large amount of data. When, based on advance recognition using a large amount of data, there are N recognition results where the utterance is recognized as a syllable "ka (/ka/)", and among these, there are M results where a syllable "ta (/ta/)" is the actual utterance, P(ta|ka) is calculated as M/N. Ideally, when the actual utterance is "ka (/ka/)", P(ka|ka) would be 1 because the syllable according to the recognition result should be "ka (/ka/)", and the rest of the components (P(ta|ka), etc.) would be 0. However, that is actually not the case, due to recognition performance limits and the like. These values are calculated in advance from a large amount of data from a large number of people. Hereinafter, conditional probabilities, such as P(ka|ka), that a recognition-result syllable coincides with an actually uttered syllable are referred to as diagonal components of the confused-sound-unit matrix, and conditional probabilities, such as P(ta|ka), that a recognition-result syllable does not coincide with an actually uttered syllable are referred to as off-diagonal components of the confused-sound-unit matrix.

Next, the operation will be described. Because step S201 through step S206 are identical to those in Embodiment 1, the description will be omitted. Next, the word expanding means 201 generates, from syllable strings outputted by the sound-unit recognition means 117, sound unit strings (syllable strings in this case) similar in the recognition processing to the outputted syllable strings (step S301). Next, a word-and-position-information registration means 120 registers in the word-to-position-mapping dictionary 115 the sound unit strings (syllable strings) outputted by the sound-unit recognition means 117 and the sound unit strings outputted by the word developing means, together with the position information acquired by the position-information acquisition means 116 (step S302).

The similar syllable strings are generated by the processing shown in Fig. 6. To begin with, a variable *i* is initialized to 1 (step S401). Next, the *i*-th syllable within the syllable string outputted by the sound-unit recognition means 117 is acquired. The acquired syllable is assigned to a (step S402). Next, as for a certain syllable *b* (*≠a*), the conditional probability P(*b*|*a*) is acquired (step S403) by referring to the confused-sound-unit matrix stored in the sound-unit confustion matrix storing means 202. Then, a check is made as to whether P(*b*|*a*) is higher than a predetermined threshold, and when P(*b*|*a*) is higher, the syllable b is stored as a substitute candidate for the *i*-th syllable (step S404 and step S405). The above-described processing is carried out for all the syllables *b* (≠*a*) (step S406), and further the processing is carried out for each syllable within the syllable string after incrementing the variable *i* (step S407 and step S408). Next, syllable strings are generated from all the combinations of syllables, where the *i*-th syllable remains the recognition result and where the *i*-th syllable has been replaced with one of the substitute candidates, and the syllable strings are considered as similar words.

Fig. 7 illustrates an example of the processing. As an example, even though the utterance is "goruhujoo" (goruhujo), the recognized syllable string is "gorucuzoo" due to the performance limits of the syllable recognition means. Here, because each of P(hu|cu), P(u|cu), and P(jo|zo) is higher than the predetermined threshold, "hu" and "u" are stored as substitute candidates for the third syllable, and "jo" is stored as a substitute candidate for the fourth syllable. When similar candidates are generated from all the combinations of the syllables of the recognition result and the substitute candidates, six similar candidates―"gorucuzoo", "goruhuzoo", "goruuzoo", "gorucujoo", "goruhujoo", and "goruujoo"―are outputted. These similar candidates are registered in the word-to-position-mapping dictionary 115 as being related to the same position information.

The processing for an address search is the same as in Embodiment 1; however, when "goruhujo" is uttered in the search, if any of the above six words is determined as a recognition result, the position of the golf course is correctly displayed.

Because Embodiment 2 is configured as described above, a voice recognition device can be provided, in which the recognition performance does not easily degrade even if errors are included in the recognition results at word registration time.

Moreover, in Embodiment 2, although similar words are generated only for a syllable string having a great acoustic likelihood when generating similar words, the corresponding similar words for the N syllable strings with the greatest acoustic likelihoods (N is an integer) may be generated. Configured as above, a voice recognition device can be provided with greater tolerance of unclear utterances when recognizing words.

In addition, since voice recognition in Japanese has been described here, minimum Japanese utterance units, that is, syllables, have been described; however, it will be obvious that similar embodiments can be configured for a foreign language, taking consonants and the like into consideration, using a recognition means, a recognition dictionary, and a confusion matrix, for minimum utterance units such as phonemes.

### Embodiment 3.

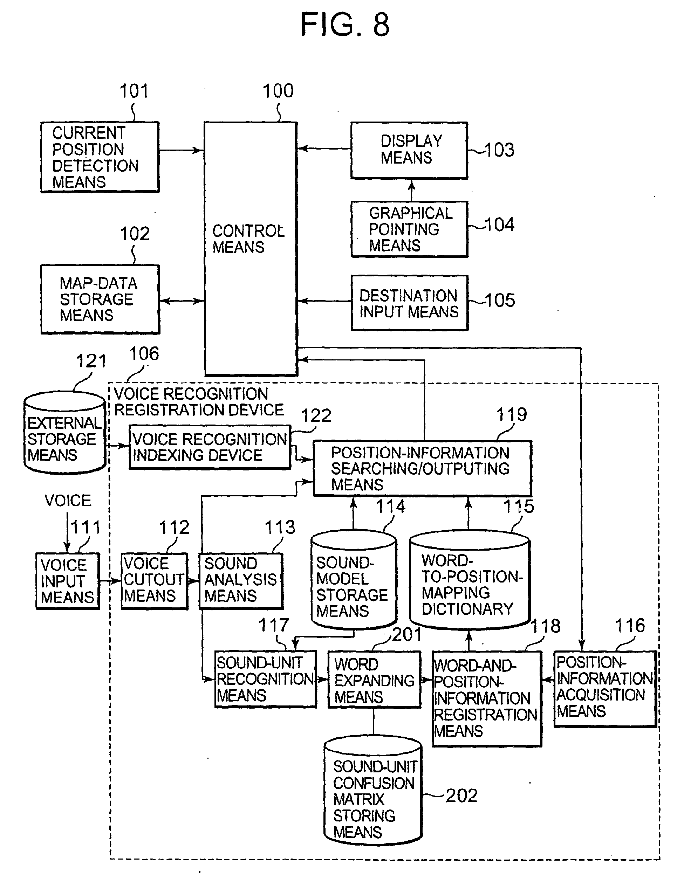

Next, a voice recognition device relevant to another embodiment of the invention will be described. Embodiment 3 provides a voice recognition device that can search for information related to a word even if the word uttered is not registered in the word dictionary at search time. Fig. 8 illustrates the system configuration of a navigation system with a voice recognition device related to the embodiment. In the figure, numeral 121 denotes an external storage means, which is configured with a high-capacity storage means such as a DVD, and stores words such as addresses to be searched for, their pronunciations, and the corresponding position information. Numeral 122 denotes a voice recognition indexing device, which is an auxiliary storage device for reading and storing a subset of the words and their pronunciations stored in the external storage means; its assigned memory is normally a small fraction of the memory capacity for storing all at once the words and the pronunciations stored in the external storage means.

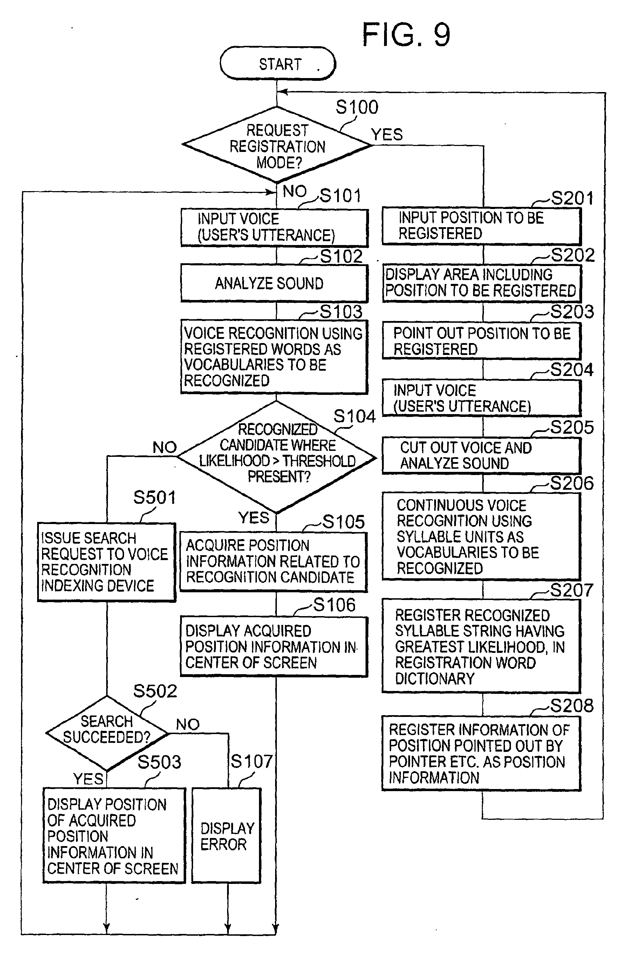

Next, the operation will be described using Fig. 9. Since the processing at registration time (step S201 through step S208) is the same as in Embodiment 1, the description will be omitted; and since step S101 through step S104 within the search processing are the same as in Embodiment 1, the description will be omitted. Next, when all the acoustic likelihoods for each recognition candidate are less than the predetermined threshold (step S104: NO), a word recognition means 114 determines that the uttered word has not been registered in the word-to-position-mapping dictionary 115. In this case, the sound feature vector of the inputted voice is given to the voice recognition indexing device 122, and a search for the word and pronunciation information and the position information, of the address in the external storage means 121 is requested (step S501). The voice recognition indexing device searches contents in the external storage device for a word, the sound feature vector and the pronunciation of which coincide with those of the inputted voice, and the position information related to the word is determined as a search result. Then, a check is made as to whether the search result has been successful (step S502). When the result has been successful, the display means 103 displays the position of the acquired position information in the center of the screen. When the search result has not been successful (no applicable information) (step S502: NO), the control means produces a recognition error display on the display means indicating that the recognition has not been successful.

According to the above-described processing, even a word that has not undergone registration processing can be processed for recognition by referring to the external storage device.

### Embodiment 4.

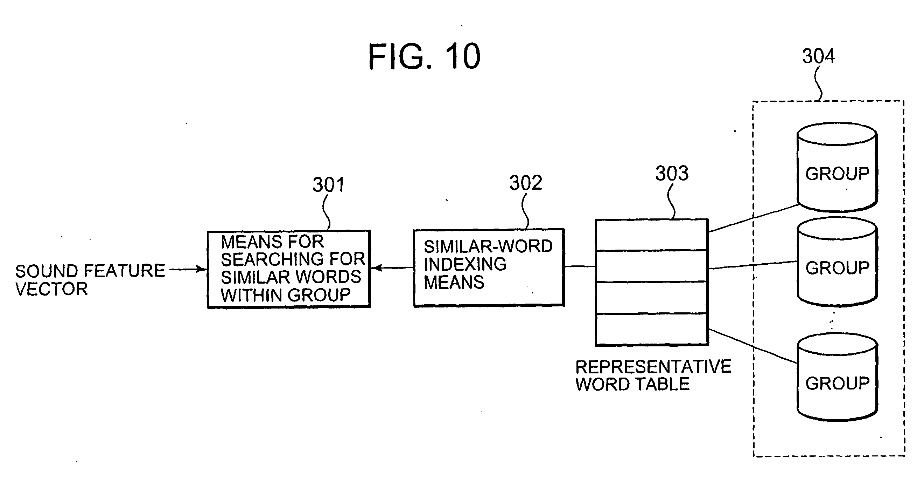

Next, an embodiment of the above-described voice recognition indexing device will be described. When there are a large number of words to be recognized, the voice recognition indexing device performs voice recognition at high speed while curtailing memory use. Fig. 10 illustrates the system configuration relevant to Embodiment 4. In the figure, numeral 301 denotes a means for searching similar words within a group. Numeral 302 denotes a similar-word indexing means, and numeral 303 denotes a representative word table, which preserves words selected from a plurality of words to be searched by the voice recognition indexing device. Numeral 304 denotes word groups―a set of groups in which a plurality of words to be searched are divided into classes acoustically similar to each representative word in the representative word table 303.

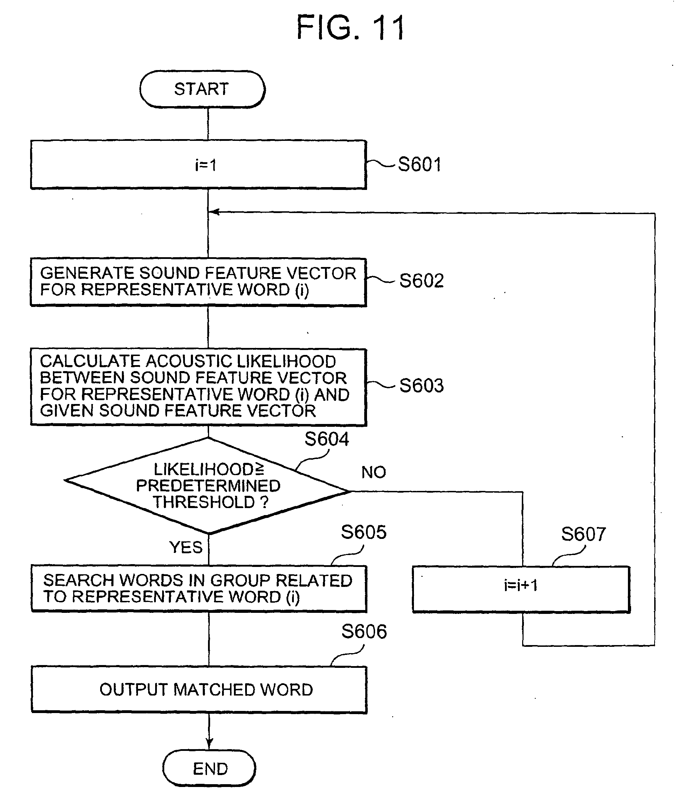

Next, the operation will be described using Fig. 11. In Fig. 11, an expression "representative word (*i*)" is used in order to express the *i*-th element in a representative word array stored in the similar-word indexing means 302. To begin with, *i* is initialized as "*i* = 1" (step S601). Next, a sound feature vector for the representative word (*i*) is generated (step S602) . The sound feature vector does not have to be generated at every power-on or at every search processing, and a vector that has been given in advance as pronunciation information for the representative word may be used. Alternatively, if generated at every power-on or at every search processing, a sound feature vector may be synthesized from an acoustic model based on phonemes or syllables, and phonemes or syllables for the representative word.

Next, a calculation is made of the acoustic likelihood of a match between the sound feature vector for the representative word (*i*) and an input-sound feature vector used as a search key (step S603), and a check is made as to whether the acoustic likelihood is not less than a predetermined threshold (step S604). When the acoustic likelihood is equal to or greater than the predetermined threshold (step S604: YES), the word having the greatest acoustic likelihood of a match with the input-sound feature vector is retrieved from the group, related to the representative word (*i*), stored in the similar-word indexing means (step S605). In step S604, when the acoustic likelihood is less than the predetermined threshold (step S604: NO), *i* is incremented by 1 (step S607), and the next representative word is evaluated.

In addition, when step S605 is executed, if a group associated with the representative word (*i*) is stored in the external storage device but is not yet present in the memory, processing may be carried out to read into the memory the words affiliated by the group, their pronunciations, and information associated with the words (position information, etc.). Meanwhile, if a representative word already exists in which the acoustic likelihood of a match with the input-sound feature vector is less than the predetermined threshold, the amount of memory used in the search process can be reduced by freeing the memory storing the words in the group associated with the representative word.

Moreover, each word held in the representative word table 303 can be designated in advance, or can be automatically determined from aplurality of words which become search objects, as described below. Furthermore, the representative word table 303 may be created at power-on of the voice recognition indexing device, or the processing may be carried out so that a predetermined representative word table that has been stored in advance in the external storage device is read in.

Moreover, because each group included in the word groups 304 is a logical concept, the groups do not have to exist physically together in groups. The processing can be carried out, for example, so that the representative word table 303 holds, together with the representative word for the group, only pointers to or addresses of the locations of words affiliated by the group, their pronunciations and related information.

Furthermore, in Embodiment 4, although the external storage device has been described as a part of a car navigation system, accessing a storage device in another device through a wireless data transfer means achieves equivalent effects. In this case, a representative word table may also be acquired through wireless communications.

### Embodiment 5.

Next, an embodiment of a voice recognition index generation means will be described, that classifies a plurality of words into groups including acoustically similar words, and selects representative words from the groups. The above-described voice recognition indexing device provides a means for efficiently searching word groups including a plurality of arbitrary words for matched words based on the input-sound vector. In order to efficiently search for words using the voice recognition indexing device, representative words must be acoustically dissimilar to each other, and a plurality of words to be searched for must be acoustically similar to any of the representative words, and must be affiliated by the group of the representative word. The voice recognition index generation device aims to categorize a plurality of words into a plurality of groups in which the acoustic likelihoods of matching are sufficiently separate from one another.

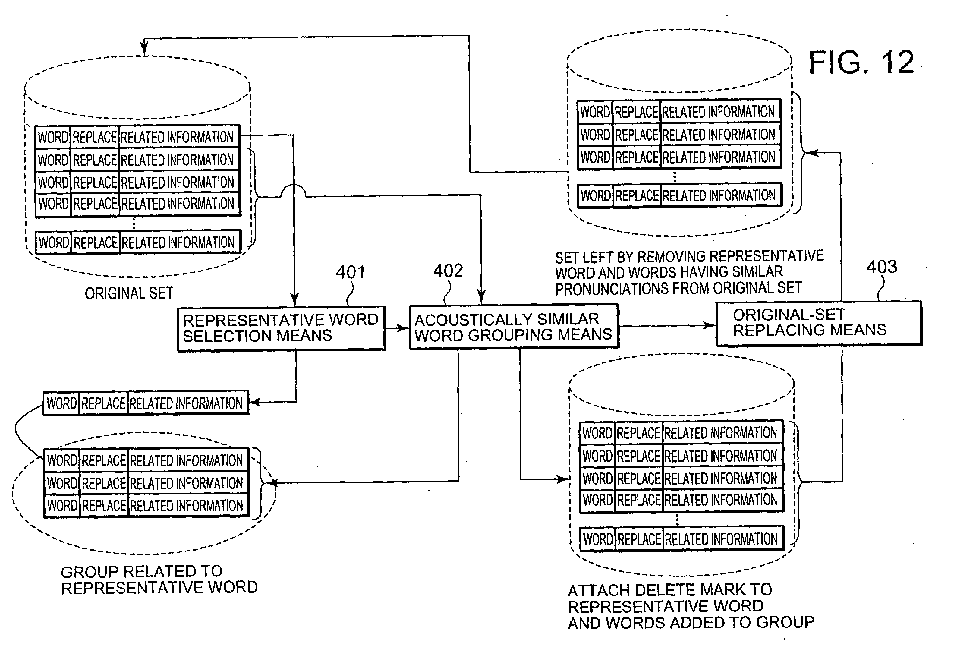

Fig. 12 illustrates a configuration relevant to the embodiment of a voice recognition index generation method of the invention. In Fig. 12, numeral 401 denotes a representative word selection means for selecting a representative word from an original set including a plurality of words to be objects of voice recognition. A representative word selected by the representative word selection means 401 may be an arbitrary word among a plurality of words included in the original set. Numeral 402 denotes an acoustically similar word groupingmeans, which selects a word having a pronunciation similar to that of the representative word among the words other than the representative words selected by the representative word selection means 401 from a plurality of words included in the original set. Here, the acoustic likelihood of a match between the sound feature vector for the representative word and the sound feature vector for each word included in the original set is calculated, and the word in which the acoustic likelihood is at a predetermined threshold or greater is determined as being affiliated by the group related to the representative word. Numeral 403 denotes an original-set replacing means, which removes from the original set words that have pronunciations similar to that of the representative word and are extracted by the acoustically similar word means, and replaces the former original set with the original set of this state, so that the representative word selection means 401 can process the set again.

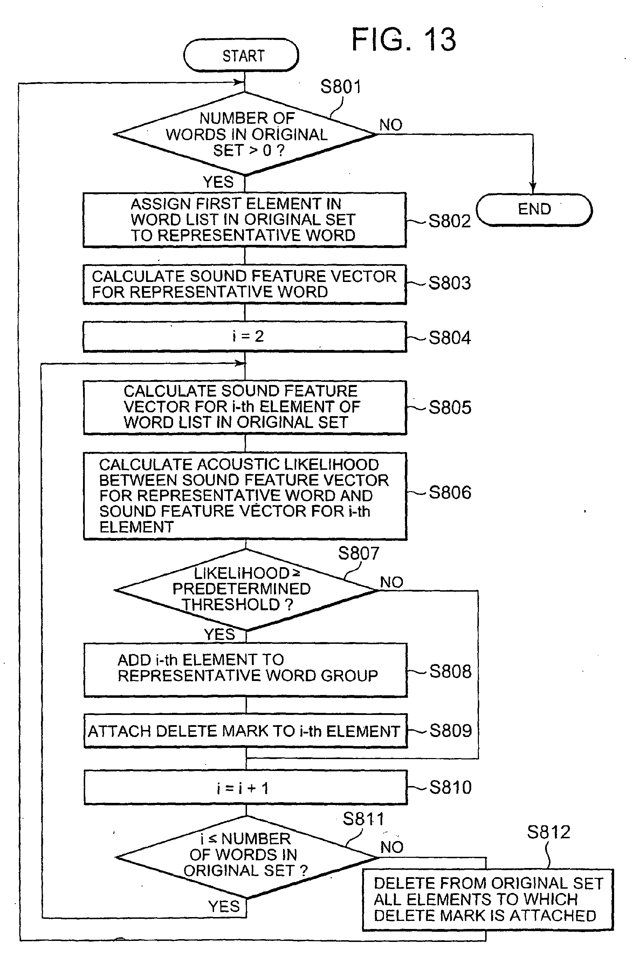

Next, the operation will.be described using Fig. 13. Firstly, the number of words in the original set is checked (step S801) . When the number of words included in the original set is zero, because the selection of a representative word and the grouping of words are no longer necessary, the processing is terminated (step S801: NO). Meanwhile, when the number of words in the original set is not zero, because the designation of a representative word and the grouping of words are necessary, the next step ensues (step S801: YES).

Next, the first element in the list of words in the original set is assigned as a representative word (step S802). Here in this embodiment, although the first element in the list of words in the original set is automatically determined as a representative word in order to considerably simplify the processing, the representative word may be any element in the set of words acoustically similar to one another. In addition, because words acoustically similar to the representative words are to be subsequently collected from the original set in the following steps, the representative word at this point may be any element in the original set.

Next, the sound feature vector for the representative word is calculated (step S803) . If words included in the original set are stored in the external storage device, the sound feature vector may be stored instead of, or together with, the pronunciation of each word, and associated in advance with each word. Furthermore, if acoustic information for each word consists only of the pronunciation of the word, the sound feature vector for the representative word can be also calculated by a method of storing in advance acoustic patterns based on phonemes or syllables as acoustic models, decomposing the pronunciation of each word into phonemes or syllables, and synthesizing acoustic patterns for the acoustic model of each sound unit.

Next, the index variable *i* is initialized to 2. The initial value is designated in order to check a representative word against words other than the representative word. If an element in the word list in the original set other than the first element is selected as a representative word in step S802, the initial value must be selected so that other words can be selected so as not to overlap the representative word.

Next, a sound feature vector for the *i*-th element of the word list in the original set is calculated (step S805). Since the method of calculating the sound feature vector has been described in step S803, it is omitted here.

Next, in order to check the representative word against the *i*-th element of the word list in the original set, the acoustic likelihood of a match between their respective sound feature vectors is calculated (step S806). A check is then made as to whether the acoustic likelihood is at a predetermined threshold or greater (step S807) . When the acoustic likelihood is at the predetermined threshold or greater (step S807: YES), the *i*-th element is added to the group that affiliates the representative word (step S808). Meanwhile, a delete mark is attached to the *i*-th element (step S809) . A delete mark is attached to the *i*-th element in step S809 because the word will be deleted from the current original set in subsequent processing. However, the word may be deleted directly from the original set without attaching a delete mark in step S809. In this case, however, the relationships between the index variable *i* and the words in the word list, and the number of words included in the original set must be adjusted.

Next, the index variable *i* is incremented by 1 (step S810), and a check is made as to whether or not the variable *i* is less than or equal to the number of words in the original set (step S811). When the variable *i* is less than or equal to the number of words in the original set (step S811: YES), it means that the search for words acoustically similar to the representative word has not reached the end of the word list, so the processing from step S805 is repeated. However, when the variable *i* exceeds the number of words in the original set (step S811: NO), it means that the search for words acoustically similar to the representative word has reached the end of the word list, and words acoustically similar to the representative word in the original set are not present any more. In this case, words to which the delete mark has been attached up to now in step S809 are deleted from the original set (step S812). Accordingly, the original set used in the selection processing of the next representative word and the next group does not include the representative word and the words affiliated by that group that have been selected up to now, and therefore, duplicate words affiliatedby a plurality of groups can be avoided. Subsequently, the processing returns to step S801, and continues with the selection of another representative word and the grouping of words acoustically similar to the representative word.

Meanwhile, when the acoustic likelihood of a match is less than the predetermined threshold in step S807 (step S807 : NO), it means that the word is not affiliated by the group related to the representative word. Therefore, processing to add the word to the group related to the representative word is not carried out, step S810 ensues, and preparations are carried out for processing the next word included in the original set.

Described above is an embodiment of the voice recognition index generation means relevant to the invention.

Furthermore, if the predetermined threshold in step S807 is made large, the number of words that are acoustically similar to a representative word and affiliated by the group of the representative word would decrease, which, conversely, would require selecting a large number of representative words and groups. Accordingly, in the voice recognition indexing device related to the invention, the number of checks of representative words against the input-sound feature vector would increase. On the other hand, because the number of words affiliated by a group decreases by increasing the predetermined threshold, the amount of memory necessary for storing information relevant to words included in each group (pronunciation information and other information) could be reduced.

In contrast, if the predetermined threshold in step S807 is made small, the number of words acoustically similar to a representative word increases, whereby the number of words included in one group increases, and consequently, the total number of representative words would decrease. Thus, the number of checks of representative words against the input-sound feature vector in the voice recognition indexing device relevant to the invention would decrease; however, after succeeding in matching representative words with the input-sound vector, the number of checks against words in the group would, conversely, increase.

Moreover, the predetermined threshold in step S807 should be the same threshold value that is used when checking an input-sound feature vector against representative words in the voice recognition indexing device relevant to the invention. Otherwise, it is conceivable that a word determined as similar to a representative word when generating a voice recognition index would be dissimilar to the representative word when searching by using the voice recognition index, or vice versa.

This is the end of description on the embodiment of the voice recognition index generation means relevant to the invention.

It would be obvious that, in above-described Embodiment 1 through Embodiment 5, each means can be constituted by either of hardware or software. In addition, when constituted by software, a recording medium that has recorded the software program is required.

### INDUSTRIAL APPLICABILITY

Because the invention is constituted as described above, when a user searches for position information by voice, by checking an utterance inputted by the user against word information registered in advance in the word-and-position-information correlation dictionary by the above-described voice recognition registration device, position information related to the word is acquired, whereby position information can be retrieved without registering standard patterns in advance.

Moreover, because the invention is constituted as described above, developed words based on the confused-sound-unit matrix are also registered in the above-described word-and-position-information correlation dictionary. Therefore, even if an utterance is taken as a word different from that actually uttered, as a consequence of the recognition precision of the voice input means or the user's vocal condition, correct position information can be retrieved by checking the utterance against words developed in the above-described word-and-position-information correlation dictionary.

Furthermore, because the invention is constituted as described above, when voice-recognition matching with a large number of words is performed, matching is carried out only for acoustically similar words, so that unnecessary matching can be eliminated.

Furthermore, because the invention is constituted as described above, when voice-recognition matching with a large number of words is performed, matching is carried out only for acoustically similar words, so that unnecessary matching can be eliminated.

Moreover, because the invention is constituted as described above, a plurality of words can be categorized into groups of acoustically similar words, and the representative words can be automatically determined.

Furthermore, because the invention is constituted as described above, a plurality of arbitrary words and information related to the words can be retrieved via voice at high speed and with efficient memory use.

Furthermore, because the invention is constituted as described above, position information related to an arbitrary word registered by a user can be retrieved with degradation of recognition precision being catered for, and words and position information stored in the external storage device can be retrieved at high speed and with low memory utilization.

## Claims

1. A voice recognition device for a car navigation system, comprising:
a sound analysis means for acoustically analyzing a user' s vocal utterance inputted by a voice input means and for outputting a feature vector for the input sound;
an acoustic-model storage means for storing in advance respective acoustic models for predetermined sound units, either a syllable or a phoneme being deemed a sound unit;
a sound-unit recognition means for checking the input-sound feature vector against the acoustic models to output a correlated sound-unit recognition candidate string;
a word-and-position-information registration means for correlating and registering in a word-and-position-information correlation dictionary the sound-unit recognition candidate string and position information acquired from a main unit of the car navigation system; and
a position-information searching/outputting means for calculating acoustic likelihoods by collating the input-sound feature vector outputted by the sound analysis means, against sound feature vectors for the sound-unit recognition candidate strings in the word-and-position-information correlation dictionary, and outputting, to the car navigation main unit, position information associated with that sound-unit recognition candidate string whose calculated acoustic likelihood is not less than a predetermined threshold.

2. A voice recognition registration device for a car navigation system according to claim 1, further comprising:
a confused-sound-unit matrix storing means for storing in advance respective probabilities that an actual sound unit uttered by a human being will be recognized as a different recognition result as a consequence of the recognition precision of the sound analysis means, for each of recognition-result sound units; and
a word developing means for outputting a candidate resembling the sound-unit recognition candidate string by replacing each sound unit in the sound-unit recognition candidate string outputted by the sound-unit recognition means, with a recognition-result sound unit in which the probability that the confused-sound-unit matrix storing means has stored for that sound unit is not less than a predetermined threshold;
wherein the word-and-position-information registration means correlates the resembling candidate to the position information acquired from the car navigation system main unit and registers this information in the word-and-position-information correlation dictionary.

3. A voice recognition index-searching device comprising:
a similar-word indexing means for storing relationships between a representative word, selected from each of word groups generated in advance by categorizing a plurality of words into groups in which words resemble in pronunciation, and its group; and
a means for searching for similar words within a group, said means collating a sound feature vector for the representative word for each group stored in the similar-word indexing means against a given sound feature vector to calculate respective acoustic likelihoods, and collating a sound feature vector for each word in that group whose representative word has an acoustic likelihood, among the calculated results, not less than a predetermined threshold, against the given sound feature vector to calculate respective acoustic likelihoods, and outputting the wordhaving the greatest acoustic likelihood.

4. A voice recognition index generation means comprising:
a representative word selection means for selecting a single word as a representative word from an original set composed of a plurality of words;
an acoustically similar word grouping means for extracting from the original set a word in which the acoustic likelihood between a sound feature vector for the word and a sound feature vector for the representative word is not less than a predetermined threshold, and including the extracted word in a same group as the representative word; and
an original-set replacing means for passing to the representative word selection means the word set left by removing from the original set the word affiliated by the group, as another original set to be processed by the representative word selection means.

5. A voice recognition device for a car navigation system according to claim 1, wherein the position-information searching/outputting means includes a voice recognition index-searching device according to claim 3 or claim 5, and uses the voice recognition index-searching device to search for and output words, their pronunciations, and position information stored in the word-and-position-information correlation dictionary or an external storage device.

6. A voice recognition device for a car navigation system according to claim 5,
wherein the word developing means extracts a probability stored in the confused-sound-unit matrix storing means for each sound unit of the resembling candidate, and outputs a probability list for the resembling candidate;
wherein the word-and-position-information registration means correlates and registers in the word-and-position-information correlation dictionary both the probability list and the similar candidate with the position information; and
wherein the position-information searching/outputting means, after reading a resembling word candidate stored in the word-and-position-information correlation dictionary and the probability list for that resembling word, and if the probability in its probability list is not less than a predetermined threshold, calculates the acoustic likelihood by checking the input-sound feature vector against the sound feature vector outputted by the sound feature vector generation means and outputs the sound-unit recognition candidate string whose acoustic likelihood is not less than the predetermined threshold, and if the probability in the probability list is less than the predetermined threshold, the position-information searching/outputting means uses the voice recognition index-searching device according to claim 3 to search for words, their pronunciations, and position information stored in the external storage device.

7. A car navigation system comprising:
a current position detection means;
a map data storage means;
an image display means;
a graphical pointing means;
a destination input means; and
a voice recognition device according to any one of claims 1, 2, 5, or 6.
